# DEMANDE DE BREVET EUROPEEN

(11) **EP 2 506 166 A1**
(43) Date de publication de la demande: **03.10.2012**
(21) Numéro de dépôt: 12159977.3
(22) Date de dépôt: 16.03.2012
(51) Int. Cl.: G06F 17/30

(54) **Gestion de la structuration d'un contenu numérique**

(30) Priorité: 28.03.2011 FR 1152540
(71) Demandeur: France Telecom, 75015 Paris (FR)
(72) Inventeur: Arslan, Yunus, 14000 Caen (FR); Auvray, Vincent, 50460 Tonneville (FR)

(57) **Abrégé**

Procédé de création d'un contenu numérique (CNT) incluant plusieurs ensembles de données (ART1,ART2), ledit contenu étant apte à être restitué sur une pluralité de dispositifs destinataires (DISP1,DISP2), caractérisé en ce qu'il comprend une étape d'obtention (ET11) de ladite pluralité d'ensembles et préalablement à la restitution (ET14), une étape d'ordonnancement (ET13) des ensembles en fonction du destinataire du contenu.

## Description

### Domaine technique

L'invention se rapporte à la gestion de la structuration d'un contenu numérique.

L'invention s'applique à tout contenu numérique apte à être restitué par un dispositif de traitement de données. Rappelons aussi qu'un dispositif de traitement de données est un dispositif équipé de ressources physiques et logicielles incluant un microprocesseur apte à traiter des données numériques.

L'invention s'applique tout particulièrement aux contenus aptes à être découpés par ensembles, par exemple par thèmes. Un tel contenu est par exemple un magazine, composé de différents thèmes tels que l'actualité, la cuisine, etc. L'invention s'applique à tout type de contenus numériques à savoir sonore, visuel, etc.

### Etat de la technique

Une des tendances actuelles est de fournir sous forme numérique des contenus jusqu'alors disponible sous forme papier. De tels contenus sont par exemple des magazines périodiques.

Un contenu numérique à la différence d'un contenu papier est manipulé par l'intermédiaire d'un dispositif, par exemple un ordinateur personnel, et a comme support de lecture un écran de l'ordinateur lorsque le contenu est visuel.

Lorsqu'un contenu numérique est créé, tout comme un contenu au format papier, celui-ci est figé et est donc le même pour tous les lecteurs. Or, les goûts, passions, loisirs, centre d'intérêts, croyances et convictions de chaque individu sont très différents d'un individu à un autre. Ainsi citons par exemple les incohérences qui peuvent survenir :
- Afficher des recettes à base de viande dans les premières pages d'un magazine de cuisine à une personne végétarienne peut être blessant.
- Afficher une publicité de montre pour homme à une femme risque d'être considéré comme une perte de temps par la lectrice.

D'une manière générale, une incohérence constatée dans un contenu donné n'incite pas le lecteur à relire le contenu en question.

Aussi, lors de l'élaboration d'un contenu tel qu'un magazine, la grosse difficulté pour un éditeur de magazine est de définir un ordonnancement judicieux des articles à publier de façon à ce que le contenu dans son ensemble plaise au plus grand nombre de lecteurs.

L'invention offre une solution ne présentant pas les inconvénients de l'état de la technique.

### L'invention

A cet effet, selon un aspect fonctionnel, l'invention a pour objet un procédé de création d'un contenu numérique incluant plusieurs ensembles de données, ledit contenu étant apte à être restitué sur une pluralité de dispositifs destinataires, **caractérisé en ce qu'**il comprend une étape d'obtention de ladite pluralité d'ensembles et préalablement à la restitution, une étape d'ordonnancement des ensembles en fonction du destinataire du contenu.

Ainsi, l'invention offre l'avantage de créer des contenus numériques différents selon le destinataire du contenu. Un contenu n'est donc plus le même pour tous les lecteurs mais diffère selon le lecteur destinataire du contenu.

Dans la suite de la description, le terme destinataire désignera le dispositif et/ou l'utilisateur du dispositif.

Selon un mode de réalisation particulier, au destinataire du contenu correspond un profil respectif et en ce que l'ordre est fonction du profil. Cette caractéristique permet d'ordonner les ensembles judicieusement en fonction du profil du destinataire du contenu. L'ordre d'affichage des ensembles est donc personnalisé et donc très apprécié par le destinataire du contenu.

Selon un autre mode de réalisation, des données sont récoltées en liaison avec la restitution du contenu sur un dispositif destinataire donné et en ce que le profil est mis à jour avec les données récoltées.

Selon un aspect matériel, l'invention a trait à une entité de création de contenus numériques incluant plusieurs ensembles de données, l'entité étant apte à être mis en oeuvre sur un dispositif de traitement de données incluant au moins un processeur, **caractérisé en ce qu'**il comprend des moyens d'obtention de ladite pluralité d'ensembles et des moyens d'ordonnancement des ensembles aptes à ordonner les ensembles en fonction du destinataire du contenu numérique.

Selon un autre aspect matériel, l'invention a trait à un dispositif de traitement de données **caractérisé en ce qu'**il comprend une entité telle que définie ci-dessus.

Selon un autre aspect matériel, l'invention a trait aussi à un programme d'ordinateur apte à être mis en oeuvre sur une entité telle que définie ci-dessus, ledit programme comprenant des instructions de code qui, lorsque le programme est exécuté par un processeur, ordonne les ensembles selon le procédé de l'invention défini ci-dessus.

L'invention sera mieux comprise à la lecture de la description qui suit, donnée à titre d'exemple et faite en référence aux dessins annexés.

### Les figures:

La figure 1 représente un système informatique sur lequel est illustré un exemple de réalisation illustrant le procédé de l'invention.
La figure 2 représente un organigramme illustrant les différentes étapes d'un mode de réalisation du procédé de l'invention.

### Description détaillée d'un exemple de réalisation illustrant l'invention

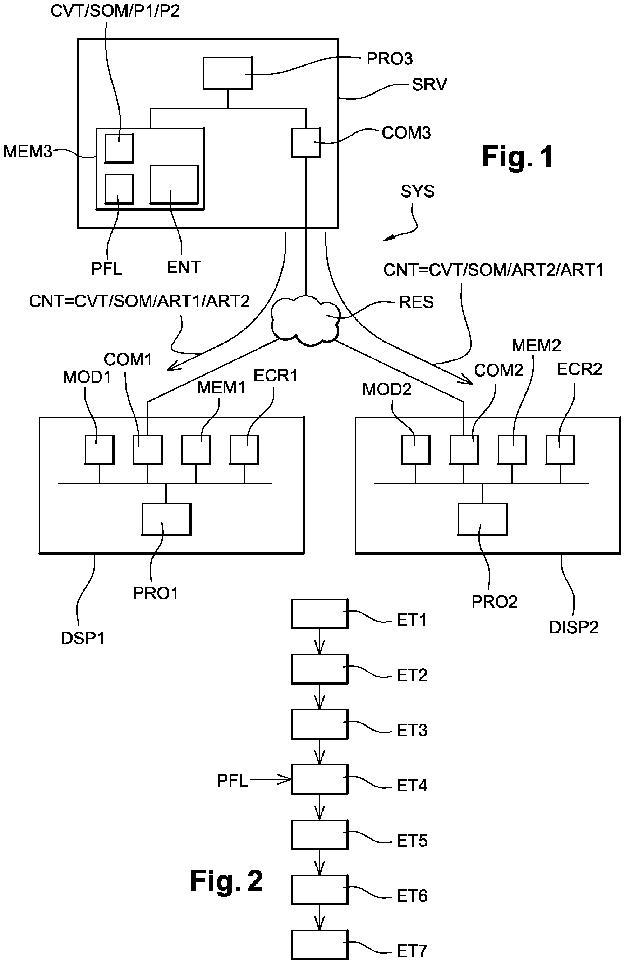

La figure 1 représente un système SYS comprenant plusieurs dispositifs de traitement de données c'est-à-dire incluant des ressources physiques et logicielles capables de traiter des données. Ces ressources incluent entre autres un microprocesseur, une mémoire, voire plusieurs mémoires, des entrées/sorties pour communiquer via un réseau de communication RES.

Concrètement, le système comprend deux dispositifs à savoir un premier dispositif DISP1 et un deuxième dispositif DISP2. Ces deux dispositifs incluent un premier processeur PRO1 et un deuxième processeur PR02, une première mémoire et une deuxième mémoire MEM2, des premiers moyens d'entrée et de sortie COM1 et des deuxièmes moyens d'entrée et sortie COM2, un premier écran ECR1 et un deuxième écran ECR2, respectivement, reliés entre eux par un premier bus BUS1 et un deuxième bus respectif BUS2.

Dans notre exemple, les dispositifs sont utilisés par un premier utilisateur UT1 et un deuxième utilisateur UT2, respectivement.

Le système comprend en outre un autre dispositif illustré au moyen d'un serveur SRV lui-même équipé d'un processeur PR03, dit troisième processeur, relié à une troisième mémoire MEM3, à des troisièmes moyens d'entrée et de sortie COM3, respectivement, reliés entre eux par un troisième bus BUS3. les troisièmes moyens de communications COM3 permettent une communication avec le réseau.

A noter que les bus décrits ci-dessus ont pour fonction d'assurer le transfert de données numériques entre les différents circuits à savoir le microprocesseur, la mémoire et les moyens d'entrées/sorties. Dans notre exemple, le bus en question inclut un bus de données et un bus de contrôle.

A noter aussi que, dans notre exemple, les mémoires décrites ci-dessus sont des mémoires permanentes de type ROM (acronyme anglo-saxon de Read Only Memory).

La troisième mémoire MEM3 stocke des données aptes à former un contenu numérique CNT, par exemple un magazine incluant plusieurs parties telles qu'une page de couverture, un sommaire et des articles et/ou des publicités.

Le serveur comprend des moyens de transmission du contenu aptes à transmettre le contenu CNT à destination des dispositifs DISP1 et DISP2.

Un mode de réalisation préféré de l'invention est décrit en référence à la figure 2.

Pour la réalisation du procédé, le serveur SRV dispose de données de profil PFL relatives aux utilisateurs destinataires du magazine.

Précisons ici que des données de profil relatives à un utilisateur servent à décrire par exemple le ou les centres d'intérêt d'un utilisateur, le niveau de qualité des données qu'il désire ou des modalités de présentation des données qu'il reçoit, etc.

Nous faisons l'hypothèse ici que
- le premier utilisateur UT1 du premier dispositif s'intéresse par ordre de préférence: à l'économie, à l'informatique et à l'automobile
- et que le deuxième utilisateur UT2 s'intéresse par ordre de préférence à la cuisine, à l'économie, et au jardinage.

Dans notre exemple, ces données de profil PFL sont stockées dans la mémoire MEM3.

Dans notre exemple, les données de profil PFL sont représentées par un couple incluant un attribut et les valeurs de cet attribut par exemple par ordre de préférence lorsqu'il y a plusieurs valeurs pour l'attribut en question. Pour simplifier l'exposé, on notera ce couple de la façon suivante dans la suite de la description:
Attribut: valeurs par ordre de préférence.

Un attribut est par exemple un âge, ou un sexe. Un attribut peut aussi désigné un ou plusieurs domaines qui intéressent un utilisateur.

Dans cette configuration, au premier utilisateur UT1 correspond par exemple les attributs suivants et les valeurs respectives suivantes
- âge: 40
- sexe: Homme
- centre d'intérêts par ordre de préférence: Economie, Informatique, Automobile

Dans cette configuration, au deuxième utilisateur UT2 correspond par exemple les attributs suivants et les valeurs respectives suivantes:
- âge: 20
- sexe: Femme
- centre d'intérêts par ordre de préférence: cuisine, sport, économie, jardinage.

La mémoire MEM3 comprend en outre une entité ENT qui, selon l'invention, va prendre en compte lors de la création d'un contenu numérique, une série d'articles et les ordonner pour former un contenu numérique différent selon le destinataire. Le destinataire peut être indifféremment un dispositif et/ou l'utilisateur d'un dispositif. Dans notre exemple, le profil de l'utilisateur destinataire du contenu sera pris en compte pour structurer le contenu. Il en résulte un contenu personnalisé pour chaque destinataire.

Dans notre exemple, à des fins de simplification de l'exposé de l'invention, les articles sont au nombre de deux. Un premier article ART1 à trait à l'économie et le deuxième article ART2 à trait au sport. A chaque article correspond des mots clés ayant un lien avec l'article. Les mots clés peuvent être choisis par le rédacteur de l'article en question ou créés par un programme d'ordinateur apte à extraire des mots de l'article ou à générer des mots clés en fonction du thème abordé par l'article en question.

Dans notre exemple, le rédacteur du premier article associe à son premier article par exemple les mots clés suivants: économie, finance, bourse. Pour simplifier l'exposé, on notera cette association de la façon suivante:
ART1/ économie, finance, bourse

De la même manière, le rédacteur du deuxième article associé à son article les mots clés suivants: sport, tennis. L'association qui en résulte est la suivante:
ART2/ sport, tennis

Dans notre exemple, le magazine est structuré de la façon suivante. Le magazine comprend
- une couverture CVT qui, dans notre exemple, est commune à tous les destinataires.
- un sommaire SOM dont la structure reste à être défini en fonction de l'ordre d'apparition des articles dans le contenu.
- Et des parties incluant des articles dont l'ordre est à définir en fonction des articles disponibles et des profils des utilisateurs destinataires du magazine, à savoir
- une partie P1 consacrée à un article
- une partie P2 consacrée à un autre article

On notera dans la suite CVT/SOM/Pl/P2 l'ordre en question dans le magazine CNT, des premières pages étant allouées à la couverture CVT, les pages suivantes étant allouées au sommaire SOM, les pages suivantes à la première partie P1 et les pages suivantes à la deuxième partie P2. Toutes les pages assemblées forment un magazine numérique.

Les étapes du procédé s'exécutent pour chaque personne destinataire du magazine numérique, ici le premier utilisateur et le deuxième utilisateur. Les étapes du procédé peuvent s'exécuter pour plusieurs destinataires soit en parallèle ou soit de façon indépendante.

Le mode de réalisation comprend les étapes suivantes. On suppose que les utilisateurs UT1 et UT2 des deux dispositifs ont été identifiés au préalable.

Lors d'une première étape ET1, plusieurs articles sont obtenus à des fins de production d'un contenu numérique tel qu'un magazine.

Lors d'une deuxième étape ET2, toutes les parties à savoir la couverture CVT, le sommaire SOM, les articles sont stockés en mémoire dans la troisième mémoire MEM3 et prêts à être assemblés.

Lors d'une troisième étape ET3, les articles et des ensembles de mots clés associés, respectivement, sont stockés dans la troisième mémoire MEM3.

Par exemple, au premier article ART1 est associé l'ensemble de mots clés suivants: économie, finance et bourse. Pour simplifier l'exposé, on notera de la façon suivante l'association entre le premier article et les mots clés:
ART1/ économie, finance, bourse

De la même façon, au deuxième article ART2 est associé l'ensemble de mots clés suivants: sport, tennis. On notera de la façon suivant l'association entre le deuxième article et les mots clés:
ART2/ sport, tennis

Lors d'une quatrième étape ET4, le troisième microprocesseur PR03 réalise une recherche de points communs entre mots clés associés aux articles et les attributs du profil de l'utilisateur destinataire du magazine. Pour cela, le troisième processeur consulte le profil de l'utilisateur à qui le contenu va être transmis.

Considérons le premier utilisateur UT1. Rappelons les attributs associés à ce premier utilisateur:
- âge: 40 ans
- sexe: Homme
- centre d'intérêts par ordre de préférence: Economie, Informatique, Automobile.

Un point commun existe entre un centre d'intérêt et un mot clé associé au premier article. Par contre le premier utilisateur n'a aucun centre d'intérêt en rapport avec le deuxième article.

Lors d'une cinquième étape ET5, le troisième microprocesseur MP3 crée un magazine CNT en ordonnant les articles en fonction du résultat de recherche de points communs. En conséquence, un magazine est créé en plaçant le premier article ART1 avant le deuxième article ART2. Un sommaire SOM est constitué en conséquence en indiquant par exemple les pages attribuées au premier article ART1 et les pages suivantes attribuées au deuxième article ART2.

Le magazine CNT à transmettre au premier utilisateur prend donc la forme suivante:
- Une couverture CVT, suivie
- d'un sommaire SOM indiquant l'ordre des articles à savoir dans les premières pages le premier article et les pages suivantes le deuxième article,
- et les articles en question, le premier article ART1 occupant les premières pages et le deuxième article ART2 les pages suivantes.

Le magazine CNT est donc assemblé et structuré de la façon suivante:
CVT/SOM/ART1/ART2

Lors d'une sixième étape ET6, le serveur SRV transmet le magazine ainsi structuré au premier dispositif DSP1.

Lors d'une septième étape ET7, le premier dispositif DISP1 reçoit le magazine CNT (CNT= CVT/SOM/ART1/ART2) et le stocke dans la première mémoire. A ce stade du procédé, le contenu peut être restitué sur le premier écran ECR1.

Considérons maintenant le deuxième utilisateur UT.

Les trois premières étapes ET1 à ET3 sont les mêmes que celles relatives au premier utilisateur.

Lors de la quatrième étape ET4, le troisième microprocesseur PR03 réalise une recherche de points communs entre mots clés associés aux articles et les attributs du profil de l'utilisateur destinataire du magazine. Pour cela, le troisième processeur consulte le profil PFL de l'utilisateur à qui le contenu va être transmis.

Rappelons les attributs associés au deuxième utilisateur UT2:
- âge: 20 ans
- sexe: Femme
- centre d'intérêts par ordre de préférence: cuisine, sport, économie, jardinage.

Rappelons aussi les mots clés associés aux articles:
ART1/ économie, finance, bourse
ART2/ sport, tennis

Un point commun existe entre un centre d'intérêt, à savoir l'économie, et le mot clé "économie" associé au premier article ART1. Il y a également un point commun entre un centre d'intérêt, à savoir le sport, et le mot clé "sport" associé au deuxième article. Or, Le deuxième utilisateur a déclaré préférer le sport à l'économie. Ainsi, lors d'une cinquième étape ET5, un magazine est créé en plaçant le deuxième article avant le premier article. Un sommaire SOM est constitué en conséquence.

Le magazine à transmettre au premier utilisateur prend donc la forme suivante: Une couverture suivie d'un sommaire SOM indiquant l'ordre des articles à savoir dans les premières pages le deuxième article et les pages suivantes le premier article, et les articles en question, le deuxième article occupant les premières pages et le premier les pages suivantes.
CVT/SOM/ART2/ART1

Lors d'une sixième étape ET6, le serveur SRV transmet le magazine ainsi structuré et assemblé au deuxième dispositif DSP2.

Lors d'une septième étape ET7, le deuxième dispositif DSP2 reçoit le magazine CNT (CNT= CVT/SOM/ART2/ART1) et le stocke dans la première mémoire. A ce stade du procédé, le contenu peut être restitué sur le premier écran ECR1.

Dans l'exemple qui précède, l'étape d'obtention ET1 de ladite pluralité d'ensembles et une étape d'ordonnancement ET5 des ensembles en fonction du destinataire du contenu sont réalisés par l'intermédiaire d'une entité ENT incluant des moyens d'obtention de ladite pluralité d'ensembles et des moyens d'ordonnancement des ensembles aptes à ordonner les ensembles en fonction du destinataire du contenu numérique.

Dans notre exemple, l'entité ENT en question est située sur le serveur SRV mais aurait très bien pu être située sur le premier dispositif DISP1 et/ou le deuxième dispositif DSP2 ou sur tout autre dispositif du réseau.

On a vu précédemment que, lors de la première étape ET1, plusieurs articles sont obtenus à des fins d'assemblage et de création d'un contenu numérique tel qu'un magazine. Cette étape d'obtention des articles peut être réalisée de différentes manières ; Par exemple, les articles peuvent être fournis directement par les rédacteurs des contenus. Les articles peuvent aussi provenir d'un découpage en parties d'un magazine déjà assemblé. Le découpage réalisé, l'entité ENT ordonne les parties selon le destinataire du contenu.

Comme dans tout contenu numérique, d'autres données peuvent être ajoutées aux articles. Par exemple, des publicités peuvent être insérées dans le magazine, par exemple entre deux articles. Selon cette variante, les publicités choisies sont fonction du profil de l'utilisateur à qui est destiné le magazine. Si un centre d'intérêt est l'informatique, une publicité incitant à l'achat d'un ordinateur peut être insérée dans le magazine.

Selon une autre variante, le profil PFL des utilisateurs peut être créé ou mis à jour automatiquement par l'intermédiaire d'une méthode d'apprentissage. Selon cette variante, le premier et le deuxième dispositif sont équipés d'un premier module MOD1 et d'un deuxième module MOD2, respectivement. Ces modules sont aptes à récoltées des informations liées à la lecture du magazine. Un module peut être
- soit un module apte à récolter des données liées à la lecture en analysant par exemple le temps passé sur un article;
- soit une interface apte à recevoir des informations saisies par l'utilisateur et utiles à la mise à jour de son profil.

Les informations récoltées par un module, le premier module MOD1 et/ou le deuxième module MOD2, sont transmises au serveur SRV, dans notre exemple à l'entité ENT, qui met à jour le profil concerné. De cette façon, la création d'un nouveau magazine prendra en compte le nouveau profil.

La méthode d"apprentissage peut aussi consister par exemple à prendre en compte des actions de l'utilisateur. Par exemple, une note peut être attribuée à un contenu en fonction du temps passé à la lecture du magazine. Dans cette configuration, par exemple, l'entité ENT aura comme fonction supplémentaire d'associer à un magazine, et plus particulièrement aux mots clés associés au magazine, une note évaluant l'intérêt de l'utilisateur vis-à-vis du magazine lu. Un article peut aussi être noté en fonction du temps passé à sa lecture. De la même manière, dans cette configuration, par exemple, le module aura comme fonction supplémentaire d'associer à un article, et plus particulièrement aux mots clés associés à l'article, une note évaluant l'intérêt de l'utilisateur qui a lu l'article. Ces différentes notes permettent en définitive de créer ou de mettre à jour, au fil du temps, un profil avec des centres d'intérêt et un ordre de préférence qui sera créé grâce aux notes.

Aussi, selon une autre variante, lorsque l'utilisateur va définir, en liaison avec des paragraphes d'un article, des marques-pages, des annotations ou des surlignages, des zoom, des mots clés en rapport avec les paragraphes en question vont être générés et ajoutés dans le profil de l'utilisateur par exemple en tant que nouveau centre d'intérêt. Par exemple un surlignage d'une phrase d'un paragraphe relatif à un sport en particulier, par exemple la natation, entraînera un ajout du sport en question comme valeur d'attribut du centre d'intérêt.

## Revendications

1. Procédé de création d'un contenu numérique (CNT) incluant plusieurs ensembles de données (ART1,ART2), ledit contenu étant apte à être restitué sur une pluralité de dispositifs destinataires (DISP1,DISP2), **caractérisé en ce qu'**il comprend une étape d'obtention (ET1) de ladite pluralité d'ensembles et préalablement à la restitution (ET7), une étape d'ordonnancement (ET5) des ensembles en fonction du destinataire du contenu.

2. Procédé selon la revendication 1, **caractérisé en ce qu'**au destinataire du contenu correspond un profil respectif (PFL) et **en ce que** l'ordre est fonction du profil.

3. Procédé selon la revendication 2, **caractérisé en ce que** des données sont récoltées en liaison avec la restitution du contenu sur un dispositif destinataire donné et **en ce que** le profil est mis à jour avec les données récoltées.

4. Entité (ENT) de création de contenus numériques (CNT) incluant plusieurs ensembles de données (ART1,ART2), l'entité étant apte à être mis en oeuvre sur un dispositif de traitement de données incluant au moins un processeur, **caractérisé en ce qu'**il comprend des moyens d'obtention de ladite pluralité d'ensembles et des moyens d'ordonnancement des ensembles aptes à ordonner les ensembles en fonction du destinataire du contenu numérique.

5. Dispositif de traitement de données (SRV,DISP1,DISP2) **caractérisé en ce qu'**il comprend une entité (ENT) telle que définie dans la revendication 4.

6. Programme d'ordinateur apte à être mis en oeuvre sur une entité telle que définie dans la revendication 4, ledit programme comprenant des instructions de code qui, lorsque le programme est exécuté par un processeur, ordonne les ensembles selon le procédé défini dans la revendication 1.
